# FASCICULE DE BREVET EUROPEEN

(11) **EP 3 145 796 B1**
(45) Date de publication et mention de la délivrance du brevet: **02.09.2020**
(21) Numéro de dépôt: 15724347.8
(22) Date de dépôt: 11.05.2015
(51) Int. Cl.: B62D 25/08

(54) **ÉCOPE POUR BOÎTE A EAU INTÉGRÉE À LA PAROI DE SÉPARATION**
SCHAUFEL FÜR EINEN IN EINE TRENNWAND EINGEBAUTEN WASSERBEHÄLTER
SCOOP FOR A WATER CONTAINER BUILT INTO THE DIVIDING WALL

(30) Priorité: 20.05.2014 FR 1454493
(43) Date de publication de la demande: 29.03.2017
(73) Titulaire: Renault s.a.s, 92100 Boulogne-Billancourt (FR)
(72) Inventeur: DELORD, Christian, 78000 Versailles (FR); HLUBINA, Thierry, 92372 Chaville (FR)
(86) Numéro de dépôt international: PCT/FR2015/051228
(87) Numéro de publication internationale: WO 2015/177433

(56) Documents cités:
- EP-A2- 1 616 735
- EP-A2- 2 067 691
- WO-A1-2013/105322

## Description

### Domaine technique de l'invention

L'invention concerne un agencement pour véhicule automobile, comprenant une paroi de séparation destinée à être disposée entre un compartiment moteur et un habitacle du véhicule, une boîte à eau destinée à recueillir l'eau s'écoulant sur un pare-brise du véhicule, et au moins un collecteur, notamment de type écope, recueillant un trop-plein d'eau contenue dans la boîte à eau.

L'invention a pour objet aussi un véhicule automobile équipé d'un tel agencement.

### État de la technique

En fonction de leur architecture, certains véhicules automobiles nécessitent l'ajout d'un collecteur, prenant la plupart du temps la forme d'une écope, au niveau de l'entrée d'air du bloc de climatisation. Cet élément a pour fonction d'éviter l'entrée d'eau en provenance de la boite à eau tout en permettant l'arrivée du flux d'air vers le bloc de climatisation sans générer de perte de charge de celui-ci.

L'ajout de cette écope est nécessaire lorsque le point bas de la boite à eau se trouve verticalement trop proche du point bas de l'entrée d'air. Cette écope est en général une pièce plastique ajoutée par encliquetage sur la cloison de chauffage qui sépare l'habitacle et le compartiment moteur. Certaines écopes sont en tôle mais celles-ci sont réalisées par le biais d'une pièce indépendante soudée par soudure sur la cloison de chauffage.

Les documents EP 2 067 691 A2, WO 2013/105322 A1 et EP 1 616 735 A2 illustrent différents agencements pour véhicule automobile comprenant une boite à eau et une paroi de séparation entre un compartiment moteur et un habitacle.

Toutefois, ces solutions ne donnent pas une totale satisfaction en raison de la complexité de l'agencement, en particulier dépendant du nombre de pièces à fabriquer et à monter, compliquant aussi la logistique et le stockage, des difficultés de montage et de problème d'étanchéité et de traitement peinture.

### Objet de l'invention

Le but de la présente invention est de proposer un agencement pour véhicule automobile qui remédie aux inconvénients listés ci-dessus. Notamment, un objet de l'invention est de fournir un tel agencement qui soit plus simple, permette une amélioration des coûts financiers, facilite le montage, la logistique et le stockage, tout en améliorant in fine l'étanchéité et en répondant aux problèmes de traitement peinture.

Cet objet peut être atteint par l'intermédiaire d'un agencement pour véhicule automobile, comprenant une paroi de séparation constituée par une cloison de chauffage ou par un tablier du véhicule automobile, destinée à être disposée entre un compartiment moteur et un habitacle du véhicule, une boîte à eau destinée à recueillir l'eau s'écoulant sur un pare-brise du véhicule, et au moins un collecteur, notamment de type écope, recueillant un trop-plein d'eau contenue dans la boîte à eau, ledit au moins un collecteur étant constitué par un élément faisant partie intégrante de la paroi de séparation, l'élément constitutif du collecteur étant un embouti formé dans la matière dans laquelle est formée la paroi de séparation.

L'agencement peut comprendre un conduit de circulation d'air d'un dispositif de chauffage-climatisation du véhicule automobile et l'élément constitutif du collecteur peut être disposé au niveau de la zone de raccordement entre le conduit de circulation d'air et la paroi de séparation, notamment dans sa partie inférieure.

Le conduit de circulation peut s'étendre d'un premier côté de la paroi de séparation, notamment destiné à être tourné vers l'habitacle, et l'élément constitutif du collecteur peut s'étendre en saillie par rapport à la paroi de séparation d'un deuxième côté de la paroi de séparation opposé audit premier côté et notamment destiné à être tourné vers le compartiment moteur.

L'élément constitutif du collecteur peut venir en saillie suivant un décalage par rapport à la paroi de séparation, notamment compté suivant une direction longitudinale du véhicule correspondant à sa direction d'avancement avant-arrière, ayant une valeur supérieure à 20 mm, de préférence comprise entre 23 mm et 27 mm.

L'élément constitutif du collecteur peut présenter une forme spatiale délimitant un décrochement en forme de créneau au niveau de chacune de ses deux extrémités latérales de raccordement au reste de la paroi de séparation, et chacun agencé en saillie vers le haut dans un sens opposé à la cavité délimitée par le collecteur.

La paroi de séparation peut être inclinée par rapport à la verticale, au moins localement au niveau dudit au moins un collecteur, suivant un angle supérieur à 10 degrés.

Un véhicule automobile pourra comprendre un tel agencement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en coupe longitudinale-verticale d'un exemple d'agencement selon l'invention,
- la figure 2 est une vue en perspective avant de l'agencement de la figure 1,
- les figures 3 et 4 illustrent, respectivement en vue de devant et selon une coupe longitudinale-verticale, un détail de l'agencement des figures précédentes au niveau de l'écope,
- et les figures 5 et 6 illustrent, respectivement en vue de devant et selon une coupe longitudinale-verticale, un détail d'un autre exemple d'agencement selon l'invention au niveau de l'écope où la paroi de séparation est verticale.

### Description de modes préférentiels de l'invention

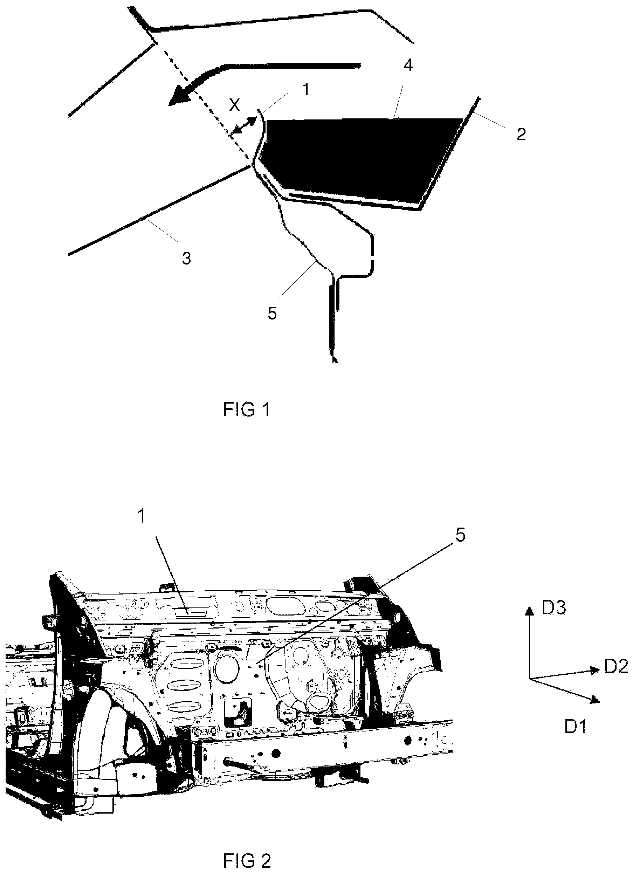

L'agencement pour véhicule automobile objet de l'invention qui va être décrit ci-après en référence aux figures 1 à 6 comprend une paroi de séparation 5 destinée à être disposée entre un compartiment moteur et un habitacle du véhicule, une boîte à eau 2 destinée à recueillir l'eau s'écoulant sur un pare-brise du véhicule, et au moins un collecteur 1, notamment de type écope, recueillant un trop-plein d'eau 4 contenue dans la boîte à eau 2.

Selon une caractéristique importante, ledit au moins un collecteur 1 est constitué par un élément faisant partie intégrante de la paroi de séparation 5.

Les termes « partie intégrante » signifient ici que le collecteur 1 est monobloc avec la paroi de séparation 5, en provenant de matière avec la paroi de séparation 5, pour constituer un ensemble monolithique et d'un seul tenant entre la paroi de séparation 5 et le collecteur 1.

Cela permet, par rapport à l'art antérieur, une suppression d'une écope indépendante de la cloison de chauffage et permet une intégration de la fonction dans une pièce existante sans générer de surcoût sur cette pièce. Cela permet aussi une suppression d'une opération de montage pour la fixation de l'écope. Il en résulte aussi une amélioration fonctionnelle en terme d'étanchéité et de traitement peinture. Enfin, la solution présentée ici permet une réduction de prix de revient global et d'investissement lié à l'outillage.

Selon l'invention, la paroi de séparation 5 est constituée par une cloison de chauffage ou constituée par un tablier du véhicule automobile, notamment en fonction des découpages de pièces choisis et des contraintes d'architecture de la paroi de séparation 5.

L'agencement peut aussi comprendre un conduit de circulation d'air 3 d'un dispositif de chauffage-climatisation du véhicule automobile. Dans ce cas, l'élément constitutif du collecteur 1 pourra avantageusement être disposé au niveau de la zone de raccordement entre le conduit de circulation d'air 3 et la paroi de séparation 5, notamment dans sa partie inférieure vue dans la direction verticale D3 (figure 2) du véhicule.

Dans un mode de réalisation tel qu'illustré mais non limitatif quant à la liberté qu'il peut être accordée à l'agencement, le conduit de circulation d'air 3 s'étend d'un premier côté de la paroi de séparation 5, notamment destiné à être tourné vers l'habitacle dans le cas où le premier côté est le côté avant de la paroi 5. L'élément constitutif du collecteur 1 s'étend en saillie suivant une direction longitudinale D1 (figure 2) du véhicule par rapport à la paroi de séparation 5 d'un deuxième côté de la paroi de séparation 5 opposé au premier côté et notamment destiné à être tourné vers le compartiment moteur dans le cas où le deuxième côté est le côté arrière de la paroi 5. La direction longitudinale D1 du véhicule correspond à la direction d'avancement avant-arrière du véhicule. Il reste toutefois envisageable que l'élément constitutif du collecteur 1 s'étende en saillie de la paroi de séparation 5 du premier côté.

Selon l'invention l'élément constitutif du collecteur 1 est un embouti formé directement dans la matière dans laquelle est formée la paroi de séparation 5.

Cet embouti est alors conformé de sorte à permettre d'éviter l'entrée d'eau dans l'habitacle dans le cas où la boite à eau 2 est au niveau de remplissage maximum en eau 4 de la boite à eau 2, et d'éviter de générer trop de pertes de charges sur le flux d'air en direction du conduit de circulation d'air 3.

A cet effet, l'élément constitutif du collecteur 1 peut préférentiellement venir en saillie suivant un décalage repéré X sur la figure 1 par rapport à la paroi de séparation 5, notamment compté suivant la direction longitudinale du véhicule D1. Ce décalage X présente avantageusement une valeur supérieure à 20 mm, de préférence comprise entre 23 mm et 27 mm.

Dans un mode de réalisation tel qu'illustré sur les figures 1 à 4, l'élément constitutif du collecteur 1 présente une forme spatiale délimitant un décrochement 6 en forme de créneau au niveau de chacune de ses deux extrémités latérales (vue dans une direction latérale D2 visible sur la figure 2 du véhicule correspondant à la direction droite-gauche du véhicule perpendiculaire à sa direction longitudinale D1) de raccordement au reste de la paroi de séparation 5. Chaque décrochement 6 est agencé en saillie vers le haut dans la direction verticale (D3) dans un sens opposé à la cavité délimitée intérieurement par le collecteur 1 pour sa fonction d'écope. Ce mode de réalisation pourra avantageusement être implémenté dans le cas particulier et représenté où la paroi de séparation 5 est inclinée par rapport à la verticale, au moins localement au niveau du collecteur 1, suivant un angle α supérieur à 10 degrés.

Ces décrochements 6 permettent de maximiser le flux d'air à l'intérieur du conduit 3 tout en étant compatible avec les contraintes de faisabilité de la découpe afin d'éviter les angles fermés par rapport aux formes obtenues par emboutissage.

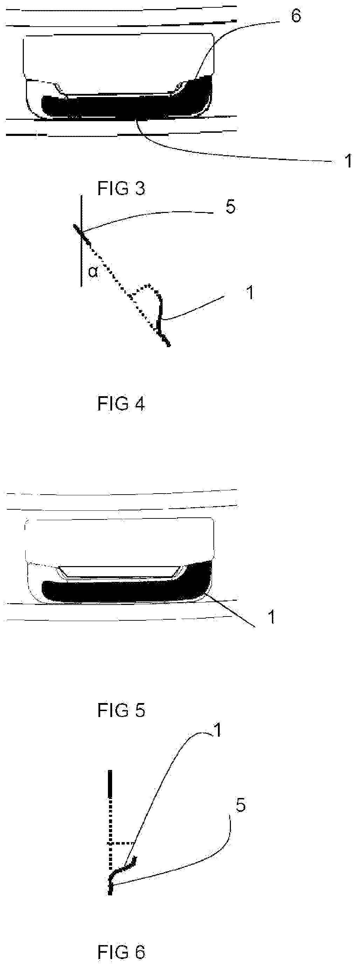

Dans un mode de réalisation tel qu'illustré sur les figures 5 et 6, l'élément constitutif du collecteur 1 présente une forme spatiale ne délimitant pas les décrochements 6 : la paroi 5 et le collecteur 1 délimitent entre eux une découpe de forme rectangulaire. Cette variante pourra notamment être implémentée dans le cas où la paroi de séparation 5 est verticale (l'angle α étant par exemple inférieur à 5 degrés).

L'invention concerne aussi un véhicule automobile comprenant un tel agencement.

## Revendications

1. Agencement pour véhicule automobile, comprenant une paroi de séparation (5) constituée par une cloison de chauffage ou par un tablier du véhicule automobile, destinée à être disposée entre un compartiment moteur et un habitacle du véhicule, une boîte à eau (2) destinée à recueillir l'eau s'écoulant sur un pare-brise du véhicule, et au moins un collecteur (1) de type écope, recueillant un trop-plein d'eau (4) contenue dans la boîte à eau (2), **caractérisé en ce que** ledit au moins un collecteur (1) est constitué par un élément faisant partie intégrante de la paroi de séparation (5), l'élément constitutif du collecteur (1) étant un embouti formé dans la matière dans laquelle est formée la paroi de séparation (5).

2. Agencement selon la revendication 1, **caractérisé en ce qu'**il comprend un conduit de circulation d'air (3) d'un dispositif de chauffage-climatisation du véhicule automobile et **en ce que** l'élément constitutif du collecteur (1) est disposé au niveau de la zone de raccordement entre le conduit de circulation d'air (3) et la paroi de séparation (5), notamment dans sa partie inférieure.

3. Agencement selon la revendication 2, **caractérisé en ce que** le conduit de circulation (3) s'étend d'un premier côté de la paroi de séparation (5), notamment destiné à être tourné vers l'habitacle, et **en ce que** l'élément constitutif du collecteur (1) s'étend en saillie par rapport à la paroi de séparation (5) d'un deuxième côté de la paroi de séparation (5) opposé audit premier côté et notamment destiné à être tourné vers le compartiment moteur.

4. Agencement selon la revendication 3, **caractérisé en ce que** l'élément constitutif du collecteur (1) vient en saillie suivant un décalage (X) par rapport à la paroi de séparation, notamment compté suivant une direction longitudinale (D1) du véhicule correspondant à sa direction d'avancement avant-arrière, ayant une valeur supérieure à 20 mm, de préférence comprise entre 23 mm et 27 mm.

5. Agencement selon l'une quelconque des revendications 1 à 4, **caractérisé en ce que** l'élément constitutif du collecteur (1) présente une forme spatiale délimitant un décrochement (6) en forme de créneau au niveau de chacune de ses deux extrémités latérales de raccordement au reste de la paroi de séparation (5), et chacun agencé en saillie vers le haut dans un sens opposé à la cavité délimitée par le collecteur (1).

6. Agencement selon la revendication 5, **caractérisé en ce que** la paroi de séparation (5) est inclinée par rapport à la verticale, au moins localement au niveau dudit au moins un collecteur, suivant un angle (α) supérieur à 10 degrés.

7. Véhicule automobile comprenant un agencement selon l'une quelconque des revendications précédentes.

## Patentansprüche

1. Anordnung für ein Kraftfahrzeug, welche eine aus einer Heizwand oder aus einer Spritzwand des Kraftfahrzeugs bestehende Trennwand (5), die dazu bestimmt ist, zwischen einem Motorraum und einem Innenraum des Fahrzeugs angeordnet zu werden, einen Wasserbehälter (2), der dazu bestimmt ist, das auf einer Windschutzscheibe des Fahrzeugs abfließende Wasser aufzufangen, und wenigstens einen Sammler (1) vom Typ einer Wasserschaufel, der einen Überlauf von in dem Wasserbehälter (2) enthaltenem Wasser (4) auffängt, umfasst, **dadurch gekennzeichnet, dass** der wenigstens eine Sammler (2) aus einem Element besteht, das ein integralen Bestandteil der Trennwand (5) ist, wobei das den Sammler (1) bildende Element eine Ausbuchtung ist, die aus dem Material ausgebildet ist, aus welchem die Trennwand (5) ausgebildet ist.

2. Anordnung nach Anspruch 1, **dadurch gekennzeichnet, dass** sie einen Luftzirkulationskanal (3) einer Heizungs- und Klimatisierungsvorrichtung des Kraftfahrzeugs umfasst, und dadurch, dass das den Sammler (1) bildende Element am Anschlussbereich zwischen dem Luftzirkulationskanal (3) und der Trennwand (5) angeordnet ist, insbesondere in seinem unteren Teil.

3. Anordnung nach Anspruch 2, **dadurch gekennzeichnet, dass** sich der Luftzirkulationskanal (3) auf einer ersten Seite der Trennwand (5) erstreckt, die insbesondere dazu bestimmt ist, dem Innenraum zugewandt zu sein, und dadurch, dass sich das den Sammler (1) bildende Element vorstehend bezüglich der Trennwand (5) auf einer zweiten Seite der Trennwand (5) erstreckt, die der ersten Seite gegenüberliegt und insbesondere dazu bestimmt ist, dem Motorraum zugewandt zu sein.

4. Anordnung nach Anspruch 3, **dadurch gekennzeichnet, dass** das den Sammler (1) bildende Element in Bezug auf die Trennwand entsprechend einem Versatz (X) vorsteht, insbesondere in einer Längsrichtung (D1) des Fahrzeugs gemessen, die dessen Vorwärts-Rückwärts-Fahrtrichtung entspricht, der einen Wert aufweist, der größer als 20 mm ist und vorzugsweise zwischen 23 mm und 27 mm liegt.

5. Anordnung nach einem der Ansprüche 1 bis 4, **dadurch gekennzeichnet, dass** das den Sammler (1) bildende Element eine räumliche Form aufweist, die einen zackenförmigen Rücksprung (6) an jedem seiner zwei seitlichen Enden des Anschlusses an den Rest der Trennwand (5) begrenzt, der jeweils nach oben vorstehend in einer zu dem vom Sammler (1) begrenzten Hohlraum entgegengesetzten Richtung angeordnet ist.

6. Anordnung nach Anspruch 5, **dadurch gekennzeichnet, dass** die Trennwand (5) wenigstens lokal im Bereich des wenigstens einen Sammlers bezüglich der Vertikalen um einen Winkel (α) geneigt ist, der größer als 10 Grad ist.

7. Kraftfahrzeug, welches eine Anordnung nach einem der vorhergehenden Ansprüche umfasst.

## Claims

1. Arrangement for a motor vehicle comprising a dividing wall (5) made up of a heating partition or a panel of the motor vehicle, intended to be disposed between an engine compartment and a passenger compartment of the vehicle, a water container (2) intended to collect the water running over a windscreen of the vehicle, and at least one scoop-type collector, collecting an overflow of water (4) contained in the water container (2), **characterized in that** said at least one collector (1) is made up of a component forming an integral part of the dividing wall (5), the constituent part of the collector (1) being a stamping formed in the material in which the dividing wall (5) is formed.

2. Arrangement according to Claim 1, **characterized in that** it comprises an air circulation conduit (3) of an air-conditioning/heating device of the motor vehicle and **in that** the constituent part of the collector (1) is disposed at the connection zone between the air circulation conduit (3) and the separation wall (5), particularly in the lower section thereof.

3. Arrangement according to Claim 2, **characterized in that** the circulation conduit (3) extends from a first side of the dividing wall (5), particularly intended to be turned towards the passenger compartment, and **in that** the constituent part of the collector (1) projects in respect of the dividing wall (5) from a second side of the dividing wall (5) opposite said first side and particularly intended to be turned towards the engine compartment.

4. Arrangement according to Claim 3, **characterized in that** the constituent part of the collector (1) projects following a displacement (X) in respect of the dividing wall, particularly calculated in a longitudinal direction (D1) of the vehicle corresponding to its front/rear travel direction, having a value greater than 20 mm, preferably of between 23 mm and 27 mm.

5. Arrangement according to any one of Claims 1 to 4, **characterized in that** the constituent part of the collector (1) exhibits a spatial shape delimiting a cavity (6) in the form of a slot at each of its two lateral ends connecting to the remainder of the dividing wall (5) and each arranged projecting upwards in an opposite direction to the cavity delimited by the collector (1).

6. Arrangement according to Claim 5, **characterized in that** the dividing wall (5) is inclined to the vertical, at least locally at said at least one collector, at an angle (α) of more than 10 degrees.

7. Motor vehicle comprising an arrangement according to any one of the preceding claims.
